# EUROPÄISCHE PATENTSCHRIFT

(11) **EP 3 598 551 B1**
(45) Veröffentlichungstag und Bekanntmachung des Hinweises auf die Patenterteilung: **06.01.2021**
(21) Anmeldenummer: 19186216.8
(22) Anmeldetag: 15.07.2019
(51) Int. Cl.: H01M 8/04089, H01M 8/04111

(54) **VORRICHTUNG UND VERFAHREN ZUM BETREIBEN EINER BRENNSTOFFZELLENEINHEIT UND FAHRZEUG**
DEVICE AND METHOD FOR OPERATING A FUEL CELL UNIT AND VEHICLE
DISPOSITIF ET PROCÉDÉ DE FONCTIONNEMENT D'UNE UNITÉ DE PILES À COMBUSTIBLE ET VÉHICULE

(30) Priorität: 18.07.2018 DE 102018211987
(43) Veröffentlichungstag der Anmeldung: 22.01.2020
(73) Patentinhaber: Siemens Mobility GmbH, 81739 München (DE)
(72) Erfinder: Förster, Till, 90763 Fürth (DE); Ruckes, Jonas, 91058 Erlangen (DE)

(56) Entgegenhaltungen:
- DE-A1-102006 002 882
- DE-A1-102006 003 799
- DE-A1-102011 105 710
- DE-A1-102015 005 837

## Beschreibung

Die vorliegende Erfindung betrifft eine Vorrichtung und Verfahren zum Betreiben einer Brennstoffzelleneinheit, die jeweils zu einem energiesparenden und effizienten Betrieb eines Brennstoffzellensystems beitragen können. Die Erfindung betrifft ferner ein Fahrzeug mit einer solchen Vorrichtung.

Einige Fahrzeuge weisen ein Brennstoffzellensystem zum Betreiben des Fahrzeugs auf, bei dem zum Beispiel Wasserstoff als Betriebsmittel oxidiert und der in einem Luftstrom befindliche Sauerstoff reduziert wird, um elektrische Antriebsenergie für das Fahrzeug bereitzustellen. Dabei ist es ein Anliegen, ein effizientes und kostengünstiges Betreiben eines solchen Antriebssystems zu ermöglichen.

Die Druckschrift DE 10 2006 003799 A1 offenbart ein Brennstoffzellensystem mit wenigstens einer Brennstoffzelle und einem Wasserstoffspeicher, in welchem Wasserstoff unter Überdruck bevorratet ist. Mittels einer Wasserstoffzufuhrleitung ist der Wasserstoffspeicher mit einem Anodenraum der Brennstoffzelle und einem Anodenkreislauf verbunden. Somit kann unverbrauchter Wasserstoff aus einem Bereich nach dem Anodenraum in die Wasserstoffzufuhrleitung zurückgeführt werden.

Die Druckschrift DE 10 2011 105710 A1 offenbart eine Rezirkulationsanordnung zur Rezirkulation von Anodenabgasen einer Brennstoffzelle mit einem Rezirkulationsgebläse und mindestens einer von einem Treibstahl eines unter Druck stehenden Gases angetriebenen Strahlvorrichtung. Ein Anodenausgang der Brennstoffzelle ist mit einem Eingang des Rezirkulationsgebläses fluidisch verbunden und ein Ausgang des Rezirkulationsgebläses ist mit einem Anodeneingang der Brennstoffzelle fluidisch verbunden.

In der Druckschrift DE 10 2015 005837 A1 ist ein weiteres Brennstoffzellensystem beschrieben, welches eine Brennstoffzelle mit einem Anodenraum und einem Kathodenraum aufweist. Abgas aus dem Anodenraum ist über einen Anodenkreislauf mit wenigstens einer Rezirkulationsfördereinrichtung zum Eingang des Anodenraums zurückführbar.

Es ist daher eine Aufgabe, die der Erfindung zugrunde liegt, eine Vorrichtung und Verfahren zum Betreiben einer Brennstoffzelleneinheit zu schaffen, die einen energiesparenden und effizienten Betrieb eines Brennstoffzellensystems ermöglichen.

Die Aufgabe wird jeweils durch die Merkmale der unabhängigen Patentansprüche gelöst. Vorteilhafte Ausgestaltungen sind in den Unteransprüchen angegeben.

Gemäß einem ersten Aspekt umfasst eine Vorrichtung zum Betreiben einer Brennstoffzelleneinheit einen Betriebsmittelbehälter, welcher zur Aufbewahrung eines unter Hochdruck befindlichen Betriebsmittels zum Betreiben der Brennstoffzelleneinheit eingerichtet ist, und ein Brennstoffzellensystem, welches die Brennstoffzelleneinheit und eine Brennstoffzellenleitung aufweist, wobei der Betriebsmittelbehälter mittels einer Hochdruckleitung, einer Versorgungsleitung und der Brennstoffzellenleitung zum Führen des Betriebsmittels mit der Brennstoffzelleneinheit fluidtechnisch gekoppelt ist. Die Vorrichtung umfasst ferner zumindest zwei Überführungseinheiten, welche jeweils fluidtechnisch zwischen dem Betriebsmittelbehälter und der Brennstoffzelleneinheit angeordnet und mit der Hochdruckleitung, der Versorgungsleitung und/oder der Brennstoffzellenleitung gekoppelt sind und welche derart ausgebildet sind, dass beim Durchgang des Betriebsmittels durch die Überführungseinheit Zustandsenergie des Betriebsmittels auf eine Komponente der Überführungseinheit überführbar ist. Die Überführungseinheiten weisen jeweils eine Turbine und einen mit der Turbine gekoppelten Abtrieb auf, sodass beim Durchgang des Betriebsmittels durch die Turbine mittels der Turbine und des Abtriebs Zustandsenergie des Betriebsmittels in mechanische und/oder elektrische Energie umwandelbar ist. Die Turbine einer Überführungseinheit ist dabei fluidtechnisch zwischen der Hochdruckleitung und der Versorgungsleitung angeordnet und der zugehörige Abtrieb ist als Generator ausgebildet. Die Turbine der weiteren Überführungseinheit ist fluidtechnisch zwischen der Versorgungsleitung und der Brennstoffzellenleitung angeordnet und der zugehörige Abtrieb ist als Kompressor ausgebildet.

Mittels der beschriebenen Vorrichtung ist es auf einfache Weise möglich, eine Brennstoffzelleneinheit energiesparend und effizient zu betreiben und zudem zur Umweltschonung beizutragen. Insbesondere kann eine solche Vorrichtung ein Antriebssystem für ein Schienenfahrzeug, ein Kraftfahrzeug, ein Luftfahrzeug oder ein Wasserfahrzeug realisieren. Darüber hinaus kann auch eine stationäre Einrichtung mit einer solchen Vorrichtung vorgesehen sein.

Die Vorrichtung leistet einen Beitrag zur Reduzierung des Energiebedarfs von solchen Fahrzeugen, indem Druckenergie von unter Druck gespeicherten Betriebsstoffen oder Betriebsmitteln beim Entspannen derselben genutzt wird. Die Brennstoffzelleneinheit sowie die Brennstoffzellenleitung bilden ein Brennstoffzellensystem, welches beispielsweise mit Wasserstoff als Betriebsmittel gespeist wird. In Abhängigkeit von dem Fahrzeug kann ein Personenkraftwagen zum Beispiel einen Betriebsmittelbehälter aufweisen, in dem 200-300 Liter Was-serstoff bei einem Druck von 700 bar gespeichert ist. Bei einem Brennstoffzellensystem eines Zugs kann der Betriebsmittelbehälter ein Volumen von mehreren Kubikmetern aufweisen, in dem der gespeicherte Wasserstoff einen Druck von 350 bar oder noch mehr aufweist. Dieser gespeicherte Druck kann mittels der beschriebenen Vorrichtung genutzt werden, um den Eigenbedarf des Brennstoffzellensystems teilweise zu speisen.

Gemäß einer bevorzugten Weiterbildung umfasst die Vorrichtung eine Rezirkulationsleitung, die dazu ausgebildet ist, unverbrauchtes Betriebsmittel von einem Ausgang der Brennstoffzelleneinheit zu einem Eingang der Brennstoffzelleneinheit zu führen. Beim Betanken werden der Wasserstoff- beziehungsweise der Betriebsmittelbehälter bis zu einem Druck von beispielsweise 350 bar bei Schienenfahrzeugen gefüllt und während des Betriebs bis auf einen Restdruck entleert. Mittels einer Rezirkulationsleitung kann zum Beispiel ein Wasserstoff-Rezirkulationsgebläse realisiert werden, um vor der Brennstoffzelleneinheit unverbrauchten, rezirkulierten Wasserstoff mit frischem Wasserstoff aus der Versorgungsleitung zu vermischen und in die Brennstoffzelleneinheit zu leiten. Auf diese Weise können die Brennstoffausnutzung und der Wirkungsgrad des Brennstoffzellensystems erhöht werden. Allerdings stellt ein solches Rezirkulationsgebläse auch einen Energieverbraucher dar, der gemäß der beschriebenen Vorrichtung von der Entspannungsarbeit beziehungsweise der in dem unter Druck befindlichen Wasserstoff angetrieben werden könnte.

Beispielsweise ist bei einem konventionellen Nahverkehrszug die Hochdruckleitung mittels eines ersten Druckminderes mit der Versorgungsleitung gekoppelt und führt Wasserstoff mit einem Druck von beispielsweise 10 bar. Im Inneren eines Brennstoffzellensystems wird der Wasserstoff dann mittels einer Ventilstation auf einen geringeren Systemdruck, beispielsweise 1,2 oder 2 bar, reduziert. Mittels der beschriebenen Vorrichtungen können insbesondere diese Übergangspositionen mit einer jeweiligen Überführungseinheit versehen werden, um die frei werdende Druckenergie des zu entspannenden Betriebsmittels zu nutzen.

Es ist somit mittels der beschriebenen Vorrichtung unter anderem möglich, ein zusätzliches elektrisches Antreiben des Rezirkulationsgebläses einzusparen und die gespeicherte Druckenergie des Wasserstoffs für den Antrieb des Rezirkulationsgebläses zu nutzen. Darüber hinaus kann die beschriebene Vorrichtung auch dazu genutzt werden, um einen Verdichter für die in der Brennstoffzelleneinheit verwendete Luft durch eine Wasserstoff-Entspannungsturbine anzutreiben, um zu einer Verbesserung des Wirkungsgrades des Brennstoffzellensystems beizutragen. Gemäß einer solchen Weiterbildung kann eine Turbine wie beschrieben aufgebaut und angeordnet sein, aber ein mit der Turbine mechanisch gekoppelter Kompressor würde anstatt Wasserstoff Verbrennungsluft fördern. Bei einem beispielsweisen Druckunterschied zwischen etwa 10 bar und 2 bar des Wasserstoffs innerhalb des Brennstoffzellensystems ist in der Regel nicht ausreichend druckgespeicherte Zustandsenergie enthalten, um die Verbrennungsluft auf den benötigten Druck zu komprimieren, ist bei einer solchen Ausgestaltung der Vorrichtung ein ergänzender elektrischer Hilfskompressor nutzbringend, um eine zuverlässige und stabile Förderung komprimierter Verbrennungsluft bereitzustellen. In Bezug auf eine Ausgestaltung der Vorrichtung zur alleinigen Verdichtung und Förderung von Wasserstoff, würde die beim Entspannen frei werdende Zustandsenergie des Wasserstoffs in der Regel ausreichen, um ein gewünschtes Mischverhältnis von frischem und unverbrauchtem Wasserstoff für die Brennstoffzelleneinheit bereitzustellen.

Gemäß einer Weiterbildung der Anordnung umfasst die Überführungseinheit eine Venturidüse, welche mit der Brennstoffzellenleitung und der Rezirkulationsleitung gekoppelt ist, sodass beim Durchgang des Betriebsmittels durch die Venturidüse ein Sog ausbildbar und dadurch unverbrauchtes Betriebsmittel aus der Rezirkulationsleitung in die Brennstoffzellenleitung ansaugbar ist. Die Venturidüse ist zum Beispiel durch ein Rohr mit einem verengten Querschnitt realisiert, an welchen die Rezirkulationsleitung anschließt. Auf diese Weise wird die in dem Betriebsmittel befindliche Energie genutzt, um einen Unterdruck zu erzeugen und unverbrauchten Wasserstoff aus der Rezirkulationsleitung anzusaugen. Die Venturidüse realisiert ein passives Bauteil und ist besonders wartungsarm. Die Überführungseinheit umfasst dabei zumindest den Rohrabschnitt mit dem verengten Querschnitt sowie den an diesem verengten Bereich angeschlossenen Rohrabschnitt, aus welchem Wasserstoff angesaugt wird.

Die Turbine einer Überführungseinheit ist nutzbringend fluidtechnisch zwischen der Hochdruckleitung und der Versorgungsleitung angeordnet und kann den Abtrieb in Ausgestaltung eines Generators betreiben. Zusätzlich ist die Turbine der weiteren Überführungseinheit fluidtechnisch zwischen der Versorgungsleitung und der Brennstoffzellenleitung angeordnet und kann den Abtrieb in Ausgestaltung eines Kompressors betreiben. Die beschriebene Vorrichtung weist daher mehrere Überführungseinheiten auf, um an vorgegebenen Positionen die in dem Betriebsmitteldruck gespeicherte Zustandsenergie für weitere Komponenten zu nutzen.

Die Turbine zwischen Hochdruckleitung und Versorgungsleitung ist für einen vorgegebenen Druckbereich eingerichtet, sodass zum Beispiel mittels eines Durchlassventils der unter Druck stehende Wasserstoff kontrolliert der Turbine zugeführt wird, um eine effiziente Rotation derselben zu ermöglichen. Mittels der Turbine kann ein Generator angetrieben werden, welcher das Umwandeln der mechanischen Bewegung in elektrische Energie ermöglicht und diese dem Brennstoffzellensystem bereitstellt. Alternativ oder zusätzlich kann generierte elektrische Energie einem Energie- oder Stromspeicher, wie einem Ackumulator oder einem Kondensator zugeführt werden.

Die jeweilige Turbine ist insbesondere in Bezug auf eine Durchflussmenge und eine Druckdifferenz spezifiziert, um innerhalb vorgegebener Parameterbereiche einen vorteilhaften Betrieb gewährleisten zu können. Beim Eintritt des Wasserstoffgases in den Bereich der jeweiligen Turbine ist es nutzbringend, eine Abschätzung der Druckdifferenz abzuwägen, die einerseits eine gewisse Leistung ermöglicht und anderseits über einen großen Betriebsbereich genutzt werden kann. Eine hohe Druckdifferenz bedeutet gleichzeitig mehr Energie beim Betrieb, aber auch ein früheres Abschalten der jeweiligen Turbine, wenn der Tankdruck beziehungsweise der in die Turbine eintretende Wasserstoffgasdruck aufgrund von Entleerung unter den für die Turbine nutzbringenden Eingangsdruck sinkt.

In der zu der Hochdruckleitung nachfolgenden Versorgungsleitung weist der Wasserstoff beispielsweise noch einen Druck von 10 bar auf, welcher in dem Brennstoffzellensystem auf einen Druck von 2 bar reduziert wird. Die zweite Turbine kann gemäß einem solchen Beispiel auf einen zugeführten Gasdruck von 10 bar eingerichtet sein und ein Entspannen des Betriebsmittels auf 2 bar ermöglichen, während die in dem Gasdruck gespeicherte Energie durch die Turbine in mechanische Energie umgewandelt beziehungsweise überführt wird, um beispielsweise den Kompressor anzutreiben, welcher eingangsseitig mit der Rezirkulationsleitung zum Verdichten des unverbrauchten Wasserstoffs gekoppelt ist. Entsprechend ist der Kompressor dann auch ausgangsseitig mit der Brennstoffzellenleitung gekoppelt. Eine solche Turbinen-Kompressor-Kombination realisiert einen Wasserstoff-Turbolader und stellt eine besonders nutzbringende Möglichkeit zur Effizienzsteigerung des Brennstoffzellensystems dar.

Ein konventionelles Rezirkulationsgebläse kann somit gemäß der beschriebenen Vorrichtung durch eine Turbinenkombination ersetzt werden, welche einen Wasserstoffturbolader realisiert. Die Turbinenkombination umfasst zumindest eine Turbine und einen Verdichter, welche über eine mechanische Verbindung gekoppelt sind. Dabei kann eine jeweilige Turbine mittels einer starren Welle oder mittels eines Getriebes mechanisch mit dem Abtrieb beziehungsweise dem Kompressor gekoppelt sein.

Die Turbine in dem Brennstoffzellensystem wird mit dem Wasserstoff der Versorgungsleitung beaufschlagt, wobei der Wasserstoff innerhalb der Turbine von einem Druck von beispielsweise 10 bar auf einen Systemdruck von etwa 2 bar entspannt wird und durch die Brennstoffzellenleitung zur Brennstoffzelleneinheit geführt wird. Die Druckänderung und damit verbundene Volumenänderung bewirken mechanische Arbeit, welche mittels der Kopplung zwischen Turbine und Verdichter an letzteren abgegeben wird. Ist die Verbindung von Turbine und Verdichter als Getriebe ausgestaltet, können unterschiedliche Drehzahlen der Turbine und des Kompressors berücksichtigt werden. Durch ein Getriebe mit einstellbarer Übersetzung kann zudem das Verhältnis von frischem Wasserstoff zu rezirkuliertem Wasserstoff eingestellt werden. Dies kann im Rahmen des Wassermanagements eines Brennstoffzellensystems nutzbringend sein. Der Verdichter bzw. Kompressor übernimmt somit die Funktion eines konventionellen Rezirkulationsgebläses und fördert unverbrauchten Wasserstoff zum Wasserstoffeinlass der Brennstoffzelleneinheit.

Darüber hinaus können auch an anderen Positionen der Vorrichtungen Turbinen-Abtrieb-Kombinationen vorgesehen sein. Zum Beispiel kann auch eine Hochdruckturbine und ein entsprechender Abtrieb im Bereich des Betriebsmittelbehälters eine weitere Überführungseinheit realisieren, wobei die Hochdruckturbine geometrisch auf einen Hochdruckbereich zwischen 20 bar und 350 bar abzustimmen wäre.

Gemäß einer besonders bevorzugten Weiterbildung umfasst die Vorrichtung zumindest eine Reduzierleitung, die eine zu der zumindest einen Überführungseinheit alternative Führung für das Betriebsmittel ausbildet. Mittels einer solchen alternativen Reduzierleitung kann eine jeweilige Turbine zur Entspannung des Wasserstoffs auf den nachfolgenden Leitungsdruck umgangen werden, wenn zum Beispiel die Turbine nicht oder eingeschränkt verfügbar ist, um den Betrieb der Brennstoffzelleneinheit zu gewährleisten. Eine entsprechende alternative Entspannungseinrichtung kann im Bereich zwischen der Hochdruckleitung und der Versorgungsleitung und/oder innerhalb des Brennstoffzellensystems vorgesehen werden, um den Wasserstoffturbolader bei Unverfügbarkeit zu umgehen, und trotzdem einen Betrieb der Brennstoffzelleneinheit und der Vorrichtung zu ermöglichen.

Gemäß einem weiteren Aspekt umfasst ein Fahrzeug eine Ausgestaltung der zuvor beschriebenen Vorrichtung zum Betreiben einer Brennstoffzelleneinheit und zum Betreiben des Fahrzeugs. Das Fahrzeug kann ein Kraftfahrzeug, wie ein PKW oder LKW, ein Schienenfahrzeug, wie ein Zug, oder auch ein Wasserfahrzeug, wie ein Schiff, oder ein Luftfahrzeug, wie ein Flugzeug, sein, welches sich der Vorrichtung zur Bereitstellung von elektrischer Energie bedient. Dadurch, dass das Fahrzeug eine Ausgestaltung der zuvor beschriebenen Vorrichtung umfasst, sind, sofern zutreffend, beschriebene Eigenschaften und Merkmale der Vorrichtung auch für das Fahrzeug offenbart und umgekehrt.

Gemäß einem weiteren Aspekt umfasst ein Verfahren zum Betreiben einer Brennstoffzelleneinheit ein Ablassen eines unter Hochdruck befindlichen Betriebsmittels aus einem Betriebsmittelbehälter und Einspeisen des Betriebsmittels in eine Hochdruckleitung zum Führen des Betriebsmittels. Das Verfahren umfasst weiter ein Einleiten des Betriebsmittels aus der Hochdruckleitung in eine Versorgungsleitung zum Führen des Betriebsmittels und ein Einleiten des Betriebsmittels aus der Versorgungsleitung in eine Brennstoffzellenleitung sowie ein Zuführen des Betriebsmittels in die Brennstoffzelleneinheit zum Betreiben der Brennstoffzelleneinheit. Dabei ist zumindest eine Überführungseinheit fluidtechnisch zwischen dem Betriebsmittelbehälter und der Brennstoffzelleneinheit angeordnet und mit der Hochdruckleitung, der Versorgungsleitung und/oder der Brennstoffzellenleitung gekoppelt und derart ausgebildet, dass beim Durchgang des Betriebsmittels durch die Überführungseinheit Zustandsenergie des Betriebsmittels auf eine Komponente der Überführungseinheit überführbar ist.

Das beschriebene Verfahren ermöglicht ein energiesparendes und effizientes Betreiben einer Brennstoffzelleneinheit und kann zudem zur Umweltschonung beitragen. Insbesondere ist das Verfahren mittels einer Ausgestaltung der zuvor beschriebenen Vorrichtung durchführbar. Daher sind, sofern zutreffend, beschriebene Eigenschaften und Merkmale der Vorrichtung auch für das Verfahren offenbart und umgekehrt.

Gemäß einer bevorzugten Weiterbildung des Verfahrens umfasst die Überführungseinheit eine Turbine und einen mit der Turbine gekoppelten Abtrieb und das Einleiten des Betriebsmittels aus der Hochdruckleitung in die Versorgungsleitung und/oder das Einleiten des Betriebsmittels aus der Versorgungsleitung in die Brennstoffzellenleitung umfasst ein Durchführen des Betriebsmittels durch die jeweilige Überführungseinheit und dadurch Antreiben der Turbine und des Abtriebs und Umwandeln von Zustandsenergie des Betriebsmittels in mechanische und/oder elektrische Energie.

Gemäß einer besonders bevorzugten Weiterbildung des Verfahrens ist eine jeweilige Reduzierleitung bereitgestellt, die eine zu der jeweiligen Überführungseinheit alternative Führung für das Betriebsmittel ausbildet. Das Verfahren umfasst ein Ermitteln eines Zustands der jeweiligen Überführungseinheit und ein Durchführen des Betriebsmittels durch die jeweilige Überführungseinheit oder durch die jeweilige Reduzierleitung in Abhängigkeit von dem ermittelten Zustand der zugehörigen Überführungseinheit. Auf diese Weise kann die Förderung des Wasserstoffs aus dem Wasserstofftank beziehungsweise dem Betriebsmittelbehälter bis hin zur Brennstoffzelleneinheit nutzbringend an vorliegende Begebenheiten angepasst und dadurch ein energiesparender, effizienter und zuverlässiger Betrieb der Brennstoffzelleneinheit und des Brennstoffzellensystems ermöglicht werden.

Ausführungsbeispiele der Erfindung sind im Folgenden anhand der schematischen Zeichnungen näher erläutert. Es zeigen:
- Figur 1: einen schematischen Aufbau einer Vorrichtung zum Betreiben einer Brennstoffzelleneinheit, und
- Figur 2: ein Ablaufdiagramm für ein Verfahren zum Betreiben einer Brennstoffzelleneinheit.

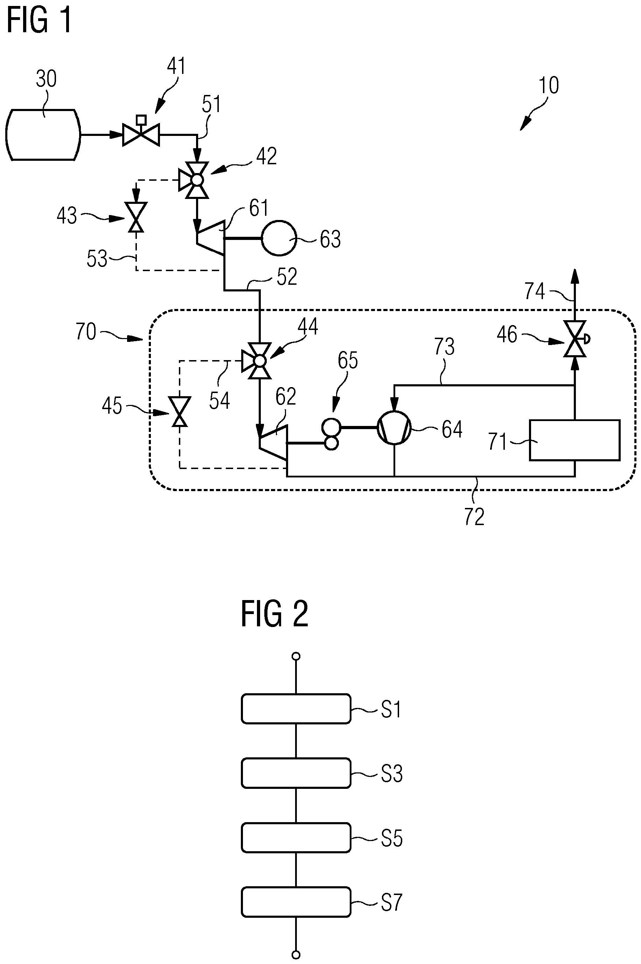

Figur 1 zeigt in einer schematischen Ansicht eine Vorrichtung 10 zum Betreiben einer Brennstoffzelleneinheit 71, die einen Betriebsmittelbehälter 30 zur Aufbewahrung eines unter Hochdruck befindlichen Betriebsmittels umfasst, welches zum Betreiben der Brennstoffzelleneinheit 71 vorgesehen ist. Die Vorrichtung 10 umfasst weiter ein Brennstoffzellensystem 70, welches die Brennstoffzelleneinheit 71 und eine Brennstoffzellenleitung 72 umfasst. Der Betriebsmittelbehälter 30 ist mittels einer Hochdruckleitung 51, einer Versorgungsleitung 52 und der Brennstoffzellenleitung 72 zum Führen des Betriebsmittels mit der Brennstoffzelleneinheit 71 fluidtechnisch gekoppelt. Außerdem umfasst die Vorrichtung 10 eine erste Überführungseinheit 61, 63 und eine zweite Überführungseinheit 62, 64, 65, welche fluidtechnisch zwischen dem Betriebsmittelbehälter 30 und der Brennstoffzelleneinheit 71 angeordnet und mit der Hochdruckleitung 51, der Versorgungsleitung 52 und/oder der Brennstoffzellenleitung 72 gekoppelt sind. Die Überführungseinheiten 61, 63 und 62, 64, 65 sind jeweils derart ausgebildet, dass beim Durchgang des Betriebsmittels durch die jeweilige Überführungseinheit 61, 63 oder 62, 64, 65 Zustandsenergie des Betriebsmittels auf eine Komponente der Überführungseinheit 61, 63 oder 62, 64, 65 überführbar ist.

Die erste Überführungseinheit 61, 63 umfasst eine erste Turbine 61 und einen mit der ersten Turbine 61 gekoppelten Abtrieb 63 in Ausgestaltung eines Generators. Beim Durchgang des Betriebsmittels durch die erste Turbine 61 ist mittels der ersten Turbine 61 und des Generators 63 Zustandsenergie des Betriebsmittels in mechanische und elektrische Energie umwandelbar, welche zum Betreiben des Fahrzeugs eingesetzt oder mittels eines Akkumulators oder Kondensators gespeichert werden kann. Die erste Turbine 61 ist fluidtechnisch zwischen der Hochdruckleitung 51 und der Versorgungsleitung 52 angeordnet.

Die zweite Überführungseinheit 62, 64, 65 ist fluidtechnisch zwischen der Versorgungsleitung 52 und der Brennstoffzellenleitung 72 angeordnet und umfasst eine zweite Turbine 62 und einen zweiten Abtrieb 64 in Ausgestaltung eines Kompressors oder Verdichters, welcher mittels eines Getriebes 65 mechanisch mit der zweiten Turbine 62 gekoppelt ist. Zudem umfasst das Brennstoffzellensystem 70 eine Rezirkulationsleitung 73, die dazu ausgebildet ist, unverbrauchtes Betriebsmittel von einem Ausgang der Brennstoffzelleneinheit 71 zu einem Eingang der Brennstoffzelleneinheit 71 zu führen. Zu diesem Zweck ist die Rezirkulationsleitung 73 einerseits mit einer Ausblasleitung 74 und andererseits mit einem Eingang des Kompressors 64 fluidtechnisch gekoppelt. Ein fluidtechnischer Ausgang des Kompressors 64 ist wiederum mit der Brennstoffzellenleitung 72 gekoppelt, sodass mittels der Rezirkulationsleitung 73 und des Kompressors 64 unverbrauchtes Betriebsmittel komprimiert und der Brennstoffzellenleitung 72 zugeführt werden kann.

Darüber hinaus weist die Vorrichtung eine erste und eine zweite Reduzierleitung 53, 54, die der ersten beziehungsweise zweiten Überführungseinheit 61, 63 beziehungsweise 62, 64, 65 zugeordnet sind. Die erste und zweite Reduzierleitung 53, 54 bilden eine alternative Führung für das Betriebsmittel aus, um im Bedarfsfall, beispielsweise bei Funktionsunfähigkeit der jeweiligen Überführungseinheiten 61, 63 und/oder 62, 64, 65, die selbige fluidtechnisch umgehen zu können.

Zudem weist die Vorrichtung 10 mehrere Ventile 41, 42, 43, 44, 45, 46 auf, um den Durchfluss des Betriebsmittels vom Betriebsmittelbehälter 30 bis zur Ausblasleitung 74 kontrollieren zu können.

Ein Verfahren zum Betreiben der Brennstoffzelleneinheit 71 kann gemäß dem Ablaufdiagramm nach Figur 2 mittels der Vorrichtung 10 wie folgt durchgeführt werden:
In einem Schritt S1 wird das unter Hochdruck befindliche Betriebsmittel aus dem Betriebsmittelbehälter 30 abgelassen und in die Hochdruckleitung 51 eingespeist. Das Betriebsmittel kann insbesondere Wasserstoff umfassen, welcher beispielsweise einen Hochdruck von 350 bar bei vollständiger Füllung des Betriebsmittelbehälters 30 aufweist. Dieser Druck entspricht zum Beispiel einem gespeicherten Wasserstoffdruck, welcher bei Schienenfahrzeugen Einsatz findet. Während des Betriebs kann aufgrund des Entleerens des Betriebsmittelbehälters 30 der Druck auf etwa 20 bar absinken. Mittels eines Durchlassventils 41 kann ein vorgegebener Druck des Wasserstoffs innerhalb der Hochdruckleitung 51 eingestellt werden.

In einem weiteren Schritt S3 kann mittels eines Kreuzventils 42 ein gewünschter Durchfluss von Wasserstoff eingestellt und dieser durch die erste Turbine 61 und/oder die Reduzierleitung 53 geführt werden, welche ein Entspannungsventil 43 aufweist. In diesem Zusammenhang kann auch ein Zustand der ersten Überführungseinheit 61, 63 ermittelt werden und der Durchfluss des Wasserstoffs durch die Überführungseinheit 61, 63 und/oder durch die erste Reduzierleitung 53 in Abhängigkeit von dem ermittelten Zustand mittels des Kreuzventils 42 eingestellt werden. Entsprechendes kann analog für die zweite Überführungseinheit 62, 64, 65 ermittelt und mittels eines weiteren Kreuzventils 44 durchgeführt werden. Wird ein Wasserstofffluss durch die erste Turbine geleitet, wird diese in Rotation versetzt und treibt den Generator 63 an, sodass ein Teil der druckgespeicherten Zustandsenergie des Wasserstoffs in mechanische und elektrische Energie umgewandelt wird. Die elektrische Energie kann dann zum Beispiel für das Fahrzeug bereitgestellt oder in einem Akkumulator oder einem Kondensator gespeichert werden.

In einem weiteren Schritt S5 tritt der Wasserstoff beispielsweise mit einem Druck von etwa 10 bar in das Brennstoffzellensystem 70 ein und kann dort mittels eines weiteren Kreuzventils 44 hinsichtlich des Durchflusses und der Führung geregelt werden. Auf diese Weise kann der Wasserstoff in der zweiten Reduzierleitung 54 mittels eines weiteren Entspannungsventils 45 und/oder beim Durchgang durch die zweite Turbine 62 entspannt werden, sodass beispielsweise ein Systemdruck von etwa 2 bar in der Brennstoffzellenleitung 72 vorherrscht. Die zweite Turbine 62 treibt mittels des Getriebes 65 den Kompressor 64 an, welcher rezirkulierten Wasserstoff aus der Rezirkulationsleitung 73 verdichtet und der Brennstoffzellenleitung 72 zuführt. Unter Verwendung des Getriebes 65 können unterschiedliche Drehzahlen der zweiten Turbine 62 und des Kompressors 64 ermöglicht werden.

In einem weiteren Schritt S7 kann mittels eines Auslassventils 46 der Anteil des unverbrauchten Wasserstoffs für die Rezirkulationsleitung 73 eingestellt werden, um ein vorteilhaftes Mischverhältnis zwischen rezirkuliertem und frischem Wasserstoff einzustellen.

Insbesondere der in dem Brennstoffzellensystem 70 realisierte Wasserstoffturbolader 62, 64 erhöht den Wirkungsgrad des Brennstoffzellensystems 70, da nicht elektrische Energie der Brennstoffzelleneinheit 71 zum Antrieb des Rezirkulationsgebläses genutzt werden muss, sondern die Energie des expandierenden Wasserstoffs zu diesem Zweck umgewandelt werden kann. Das Rezirkulationsgebläse wäre dabei zum Beispiel durch eine Rezirkulationsleitung und einen elektrisch angetriebenen Verdichter realisiert, welcher unverbrauchten Wasserstoff verdichtet und wieder der Brennstoffzellenleitung zuführt. Wird gemäß bisheriger Konstruktionen Wasserstoff in einer Ventilstation entspannt, geht die im Druck gespeicherte Energie verloren beziehungsweise wird nicht zum Betreiben des Fahrzeugs genutzt. In einer Turbine 61, 62 kann diese Energie genutzt werden, um damit zum Beispiel einen elektrischen Antrieb für das Rezirkulationsgebläse zu ersetzen.

Das Getriebe 65 zwischen der zweiten Turbine 62 und dem Verdichter 64 ermöglicht eine variable Übersetzung, sodass ein nutzbringendes Verhältnis von frischem und rezirkulierten Wasserstoff einstellbar ist.

Ein solcher Betriebsmittelturbolader 62, 64, 65 trägt durch den höheren Systemwirkungsgrad über die Lebensdauer des Brennstoffzellensystems 70 zu einem effizienten, kostengünstigen und umweltschonenden Betreiben desselben bei. Mittels Entspannungsturbinen 61, 62, welche den Tankdruck beziehungsweise Betriebsmittelbehälterdruck auf einen nachfolgenden Leitungsdruck reduzieren, kann an den entsprechenden Position die Druckenergie des Betriebsmittels genutzt und der Wirkungsgrad des Gesamtsystems erhöht werden. Die beiden alternativen Reduzierleitungen 53 und 54 realisieren alternative Gasentspannungseinrichtungen, mittels derer die beide Turbinen 61, 62 in einem Unverfügbarkeitsfall umgangen werden, sodass der Betrieb des Systems beziehungsweise der Vorrichtung 10 nicht beeinträchtigt wird.

Mittels der Druckgasentspannungsturbine 61 und des Generators 63 kann elektrischer Strom bereitgestellt werden, der den Eigenbedarfsverbrauchern der Brennstoffzelleneinheit 71 parallel zur Speisung durch ein Bordnetz zugeführt werden kann.

Auf diese Weise kann ein effizientes Antriebssystem realisiert und im laufenden Betrieb die Energie- und Umweltbilanz eines Fahrzeugs mit einer solchen Vorrichtung 10 verbessert werden.

### Bezugszeichenliste

- 10: Vorrichtung
- 30: Betriebsmittelbehälter
- 41: Durchlassventil
- 42: Kreuzventil
- 43: Entspannungsventil
- 44: Kreuzventil
- 45: Entspannungsventil
- 46: Auslassventil
- 51: Hochdruckleitung
- 52: Versorgungsleitung
- 53: alternative Reduzierleitung
- 54: alternative Reduzierleitung
- 61: erste Turbine
- 62: zweite Turbine
- 63: erster Abtrieb / Generator
- 64: zweiter Abtrieb / Kompressor
- 65: Getriebe
- 70: Brennstoffzellensystem
- 71: Brennstoffzelleneinheit
- 72: Brennstoffzellenleitung
- 73: Rezirkulationsleitung
- 74: Ausblasleitung

## Patentansprüche

1. Vorrichtung (10) zum Betreiben einer Brennstoffzelleneinheit (71), umfassend:
- einen Betriebsmittelbehälter (30), welcher zur Aufbewahrung eines unter Hochdruck befindlichen Betriebsmittels zum Betreiben der Brennstoffzelleneinheit (71) eingerichtet ist,
- ein Brennstoffzellensystem (70), welches die Brennstoffzelleneinheit (71) und eine Brennstoffzellenleitung (72) umfasst, wobei der Betriebsmittelbehälter (30) mittels einer Hochdruckleitung (51), einer Versorgungsleitung (52) und der Brennstoffzellenleitung (72) zum Führen des Betriebsmittels mit der Brennstoffzelleneinheit (71) fluidtechnisch gekoppelt ist, und
- zwei Überführungseinheiten (61, 63; 62, 64, 65), welche jeweils fluidtechnisch zwischen dem Betriebsmittelbehälter (30) und der Brennstoffzelleneinheit (71) angeordnet und mit der Hochdruckleitung (51), der Versorgungsleitung (52) und/oder der Brennstoffzellenleitung (72) gekoppelt sind und welche derart ausgebildet sind, dass beim Durchgang des Betriebsmittels durch die Überführungseinheit (61, 63; 62, 64, 65) Zustandsenergie des Betriebsmittels auf eine Komponente der Überführungseinheit (61, 63; 62, 64, 65) überführbar ist, wobei die Überführungseinheiten (61, 63; 62, 64, 65) jeweils eine Turbine (61, 62) und einen mit der Turbine (61, 62) gekoppelten Abtrieb (63, 64) umfassen, sodass beim Durchgang des Betriebsmittels durch die Turbine (61, 62) mittels der Turbine (61, 62) und des Abtriebs (63, 64) Zustandsenergie des Betriebsmittels in mechanische und/oder elektrische Energie umwandelbar ist, wobei die Turbine (61) einer Überführungseinheit (61, 63) fluidtechnisch zwischen der Hochdruckleitung (51) und der Versorgungsleitung (52) angeordnet ist und der zugehörige Abtrieb (63) als Generator ausgebildet ist, und wobei die Turbine (62) der anderen Überführungseinheit (62, 64, 65) fluidtechnisch zwischen der Versorgungsleitung (52) und der Brennstoffzellenleitung (72) angeordnet ist und der Abtrieb (64) als Kompressor ausgebildet ist.

2. Vorrichtung (10) nach Anspruch 1, umfassend eine Rezirkulationsleitung (73), die dazu ausgebildet ist, unverbrauchtes Betriebsmittel von einem Ausgang der Brennstoffzelleneinheit (71) zu einem Eingang der Brennstoffzelleneinheit (71) zu führen.

3. Vorrichtung (10) nach Anspruch 2, bei der die Überführungseinheit eine Venturidüse umfasst, welche mit der Brennstoffzellenleitung (72) und der Rezirkulationsleitung (73) gekoppelt ist, sodass beim Durchgang des Betriebsmittels durch die Venturidüse ein Unterdruck ausbildbar und dadurch unverbrauchtes Betriebsmittel aus der Rezirkulationsleitung (73) in die Brennstoffzellenleitung (72) ansaugbar ist.

4. Vorrichtung (10) nach Anspruch 2, bei der die Turbine (62) und der Abtrieb (65) mittels einer Welle oder eines Getriebes (65) mechanisch miteinander gekoppelt sind, wobei ein fluidtechnischer Eingang des Kompressors (64) mit der Rezirkulationsleitung (73) und ein fluidtechnischer Ausgang des Kompressors (64) mit der Brennstoffzellenleitung (72) gekoppelt ist.

5. Vorrichtung (10) nach einem der vorhergehenden Ansprüche, umfassend eine Reduzierleitung (53, 54), die eine zu der Überführungseinheit (61, 63; 62, 64, 65) alternative Führung für das Betriebsmittel ausbildet.

6. Fahrzeug, umfassend:
eine Vorrichtung (10) nach einem der Ansprüche 1 bis 5, die zum Betreiben des Fahrzeugs eingerichtet ist.

7. Verfahren zum Betreiben einer Brennstoffzelleneinheit (71), durchführbar mittels einer Vorrichtung (10) nach einem der Ansprüche 1 bis 5, umfassend:
- Ablassen eines unter Hochdruck befindlichen Betriebsmittels aus einem Betriebsmittelbehälter (3) und Einspeisen des Betriebsmittels in eine Hochdruckleitung (51) zum Führen des Betriebsmittels,
- Einleiten des Betriebsmittels aus der Hochdruckleitung (51) in eine Versorgungsleitung (52) zum Führen des Betriebsmittels,
- Einleiten des Betriebsmittels aus der Versorgungsleitung (52) in eine Brennstoffzellenleitung (72) und Zuführen des Betriebsmittels in die Brennstoffzelleneinheit (71) zum Betreiben der Brennstoffzelleneinheit (71), wobei zwei Überführungseinheiten (61, 63; 62, 64, 65) jeweils fluidtechnisch zwischen dem Betriebsmittelbehälter (3) und der Brennstoffzelleneinheit (71) angeordnet und mit der Hochdruckleitung (51), der Versorgungsleitung (52) und/oder der Brennstoffzellenleitung (72) gekoppelt sind, welche derart ausgebildet sind, dass beim Durchgang des Betriebsmittels durch die Überführungseinheit (61, 63; 62, 64, 65) Zustandsenergie des Betriebsmittels auf eine Komponente der Überführungseinheit (61, 63; 62, 64, 65) überführbar ist, wobei die Überführungseinheiten (61, 63; 62, 64, 65) jeweils eine Turbine (61, 62) und einen mit der Turbine (61, 62) gekoppelten Abtrieb (63, 64, 65) umfassen und bei dem das Einleiten des Betriebsmittels aus der Hochdruckleitung (51) in die Versorgungsleitung (52) und/oder das Einleiten des Betriebsmittels aus der Versorgungsleitung (52) in die Brennstoffzellenleitung (72) umfasst:
Durchführen des Betriebsmittels durch die jeweilige Überführungseinheit (61, 63; 62, 64, 65) und dadurch Antreiben der jeweiligen Turbine (61, 62) und des jeweiligen Abtriebs (63, 64) und Umwandeln von Zustandsenergie des Betriebsmittels in mechanische und/oder elektrische Energie.

8. Verfahren nach Anspruch 7, bei dem eine jeweilige Reduzierleitung (53, 54) bereitgestellt ist, die eine zu der jeweiligen Überführungseinheit (61, 63; 62, 64, 65) alternative Führung für das Betriebsmittel ausbildet, umfassend:
- Ermitteln eines Zustands der jeweiligen Überführungseinheit (61, 63; 62, 64, 65), und
- Durchführen des Betriebsmittels durch die jeweilige Überführungseinheit (61, 63; 62, 64, 65) oder durch die Reduzierleitung (53, 54) in Abhängigkeit von dem ermittelten Zustand der jeweiligen Überführungseinheit (61, 63; 62, 64, 65).

## Claims

1. Apparatus (10) for operating a fuel cell unit (71), comprising:
- an operating medium container (30), which is configured to store an operating medium kept under high pressure for operating the fuel cell unit (71),
- a fuel cell system (70), which comprises the fuel cell unit (71) and a fuel cell line (72), wherein the operating medium container (30) is fluidically coupled to the fuel cell unit (71) by means of a high-pressure line (51), a supply line (52) and the fuel cell line (72) for guiding the operating medium, and
- two transfer units (61, 63; 62, 64, 65), which are in each case fluidically arranged between the operating medium container (30) and the fuel cell unit (71) and are coupled to the high-pressure line (51), the supply line (52) and/or the fuel cell line (72) and which are embodied such that, when the operating medium passes through the transfer unit (61, 63; 62, 64, 65), state energy of the operating medium can be transferred to a component of the transfer unit (61, 63; 62, 64, 65), wherein the transfer units (61, 63; 62, 64, 65) each comprise a turbine (61, 62) and an output (63, 64) coupled to the turbine (61, 62), such that when the operating medium passes through the turbine (61, 62), state energy of the operating medium can be converted into mechanical and/or electrical energy by means of the turbine (61, 62) and the output (63, 64), wherein the turbine (61) of one transfer unit (61, 63) is fluidically arranged between the high-pressure line (51) and the supply line (52) and the associated output (63) is embodied as a generator, and wherein the turbine (62) of the other transfer unit (62, 64, 65) is fluidically arranged between the supply line (52) and the fuel cell line (72) and the output (64) is embodied as a compressor.

2. Apparatus (10) according to claim 1, comprising a recirculation line (73), which is embodied to guide unconsumed operating medium from an outlet of the fuel cell unit (71) to an inlet of the fuel cell unit (71).

3. Apparatus (10) according to claim 2, in which the transfer unit comprises a Venturi nozzle, which is coupled to the fuel cell line (72) and the recirculation line (73), such that when the operating medium passes through the Venturi nozzle, it is possible for a negative pressure to be formed, and as a result unconsumed operating medium can be drawn from the recirculation line (73) into the fuel cell line (72).

4. Apparatus (10) according to claim 2, in which the turbine (62) and the output (65) are mechanically coupled to one another by means of a shaft or a gear unit (65), wherein a fluidic inlet of the compressor (64) is coupled to the recirculation line (73) and a fluidic outlet of the compressor (64) is coupled to the fuel cell line (72).

5. Apparatus (10) according to one of the preceding claims, comprising a reduction line (53, 54) which embodies an alternative guide for the operating medium compared to the transfer unit (61, 63; 62, 64, 65).

6. Vehicle, comprising:
an apparatus (10) according to one of claims 1 to 5, which is configured for operating the vehicle.

7. Method for operating a fuel cell unit (71), which can be performed by means of an apparatus (10) according to one of claims 1 to 5, comprising:
- draining an operating medium kept under high pressure from an operating medium container (3) and feeding the operating medium into a high-pressure line (51) to guide the operating medium,
- introducing the operating medium into a supply line (52) from the high-pressure line (51) to guide the operating medium,
- introducing the operating medium into a fuel cell line (72) from the supply line (52) and supplying the operating medium into the full cell unit (71) to operate the fuel cell unit (71), wherein two transfer units (61, 63; 62, 64, 65) are each fluidically arranged between the operating medium container (3) and the fuel cell unit (71) and coupled to the high-pressure line (51), the supply line (52) and/or the fuel cell line (72), which are embodied such that, when the operating medium passes through the transfer unit (61, 63; 62, 64, 65), state energy of the operating medium can be transferred to a component of the transfer unit (61, 63; 62, 64, 65), wherein the transfer units (61, 63; 62, 64, 65) each comprise a turbine (61, 62) and an output (63, 64, 65) coupled to the turbine (61, 62) and in which the introduction of the operating medium into the supply line (52) from the high-pressure line (51) and/or the introduction of the operating medium into the fuel cell line (72) from the supply line (52) comprises: guiding the operating medium through the respective transfer unit (61, 63; 62, 64, 65) and, as a result, driving the respective turbine (61, 62) and the respective output (63, 64) and converting state energy of the operating medium into mechanical and/or electrical energy.

8. Method according to claim 7, in which a respective reduction line (53, 54) is provided, which embodies an alternative guide for the operating medium compared to the respective transfer unit (61, 63; 62, 64, 65), comprising:
- ascertaining a state of the respective transfer unit (61, 63; 62, 64, 65), and
- guiding the operating medium through the respective transfer unit (61, 63; 62, 64, 65) or through the reduction line (53, 54) as a function of the ascertained state of the respective transfer unit (61, 63; 62, 64, 65).

## Revendications

1. Installation (10) pour faire fonctionner une unité (71) de pile à combustible, comprenant :
- une cuve (30) de fluide de fonctionnement, qui est conçue pour conserver un fluide de fonctionnement se trouvant sous haute pression, afin de faire fonctionner l'unité (71) de pile à combustible,
- un système (70) de pile à combustible, qui comprend l'unité (71) de pile à combustible et un conduit (72) de pile à combustible, la cuve (30) de fluide de fonctionnement communiquant fluidiquement avec l'unité (71) de pile à combustible pour conduire du fluide de fonctionnement au moyen d'un conduit (51) de haute pression, d'un conduit (52) d'alimentation et du conduit (72) de pile à combustible, et
- deux unités (61, 63 ; 62, 64, 65) de transfert, qui sont montées chacune en technique des fluides entre la cuve (30) de fluide de fonctionnement et l'unité (71) de pile à combustible et qui communiquent avec le conduit (51) de haute pression, le conduit (52) d'alimentation et/ou le conduit (72) de pile à combustible et qui sont constituées de manière à ce que, au passage du fluide de fonctionnement dans l'unité (61, 63 ; 62, 64, 65) de transfert, de l'énergie d'état du fluide de fonctionnement puisse être transférée à un composant de l'unité (61, 63 ; 62, 64, 65) de transfert, les unités (61, 63 ; 62, 64, 65) de transfert comprenant chacune une turbine (61, 62) et une sortie (63, 64) accouplée à la turbine (61, 62), de manière à ce que, lors du passage du fluide de fonctionnement dans la turbine (61, 62), de l'énergie d'état du fluide de fonctionnement puisse, au moyen de la turbine (61, 62) et de la sortie (63, 64), être transformée en énergie mécanique et/ou électrique, la turbine (61) d'une unité (61, 63) de transfert étant montée en technique des fluides entre le conduit (51) de haute pression et le conduit (52) d'alimentation et la sortie (63) associée étant constituée en générateur, et la turbine (62) de l'autre unité(62, 64, 65) de transfert étant montée en technique des fluides entre le conduit (52) d'alimentation et le conduit (72) de pile à combustible et la sortie (64) étant constituée en un compresseur.

2. Installation (10) suivant la revendication 1, comprenant un conduit (73) de recirculation, qui est constitué pour conduire du fluide de fonctionnement inutilisé d'une sortie de l'unité (71) de pile à combustible à une entrée de l'unité (71) de pile à combustible.

3. Installation (10) suivant la revendication 2, dans laquelle l'unité de transfert comprend une buse venturi, qui communique avec le conduit (72) de pile à combustible et le conduit (73) de recirculation, de manière à ce que, lorsque le fluide de fonctionnement passe dans la buse venturi, une dépression puisse se constituer et ainsi du fluide de fonctionnement inutilisé puisse être aspiré du conduit (73) de recirculation dans le conduit (72) de pile à combustible.

4. Installation (10) suivant la revendication 2, dans laquelle la turbine (62) et la sortie (65) sont accouplées mécaniquement entre elles au moyen d'un arbre ou d'une transmission (65), une entrée en technique des fluides du compresseur (64) communiquant avec le conduit (73) de recirculation et une sortie en technique des fluides du compresseur (64) communiquant avec le conduit (72) de pile à combustible.

5. Installation (10) suivant l'une des revendications précédentes, comprenant un conduit (53, 54) de réduction, qui constitue une alternative de conduite du fluide de fonctionnement par rapport à l'unité (61, 63 ; 62, 64, 65) de transfert.

6. Véhicule, comprenant :
une installation (10) suivant l'une des revendications 1 à 5, qui est conçue pour faire fonctionner le véhicule.

7. Procédé pour faire fonctionner une unité (71) de pile à combustible, pouvant être effectué au moyen d'une installation (10) suivant l'une des revendications 1 à 5, dans lequel :
- on sort du fluide de fonctionnement se trouvant sous haute pression d'une cuve (3) de fluide de fonctionnement et on envoie le fluide de fonctionnement à un conduit (51) sous haute pression pour conduire le fluide de fonctionnement,
- on envoie le fluide de fonctionnement du conduit (51) sous haute pression à un conduit (52) d'alimentation pour conduire le fluide de fonctionnement,
- on envoie le fluide de fonctionnement du conduit (52) d'alimentation à un conduit (72) de pile à combustible et on envoie le fluide de fonctionnement à l'unité (71) de pile à combustible pour faire fonctionner l'unité (71) de pile à combustible, dans lequel deux unités (61, 63 ; 62, 64, 65) de transfert sont montées chacune en technique des fluides entre la cuve (30) de fluide de fonctionnement et l'unité (71) de pile à combustible et communiquent avec le conduit (51) de haute pression, le conduit (52) d'alimentation et/ou le conduit (72) de pile à combustible, lesquelles sont constituées de manière à ce que, au passage du fluide de fonctionnement dans l'unité (61, 63 ; 62, 64, 65) de transfert, de l'énergie d'état du fluide de fonctionnement puisse être transférée à un composant de l'unité (61, 63 ; 62, 64, 65) de transfert, les unités (61, 63 ; 62, 64, 65) de transfert comprenant chacune une turbine (61, 62) et une sortie (63, 64, 65) accouplée à la turbine (61, 62), et dans lequel l'envoie du fluide de fonctionnement du conduit (51) sous haute pression au conduit (52) d'alimentation et/ou l'envoie du fluide de fonctionnement du conduit (52) d'alimentation au conduit (72) de pile à combustible comprend :
le passage du fluide de fonctionnement dans l'unité (61, 63 ; 62, 64, 65) respective de transfert et ainsi l'entraînement de la turbine (61, 62) respective et de la sortie (63, 64) respective et la transformation de l'énergie d'état du fluide de fonctionnement en énergie mécanique et/ou électrique.

8. Procédé suivant la revendication 7, dans lequel il est mis à disposition un conduit (53, 54) respectif de réduction, qui constitue une alternative à la possibilité de conduire le fluide de fonctionnement par rapport à l'unité (61, 63 ; 62, 64, 65) respective de transfert, dans lequel :
- on détermine un état de l'unité (61, 63 ; 62, 64, 65) de transfert, et
- on fait passer le fluide de fonctionnement dans l'unité (61, 63 ; 62, 64, 65) respective de transfert ou dans le conduit (53, 54) de réduction en fonction de la détermination de l'état de l'unité (61, 63 ; 62, 64, 65) respective de transfert.
